Europäisches Patentamt

European Patent Office

Office européen des brevets

(19)

(11) Publication number: **0 012 125**
A2

(12) **EUROPEAN PATENT APPLICATION**

(21) Application number: **79850102.9**

(22) Date of filing: **20.11.79**

(51) Int. Cl.³: **G 09 F 9/00**
**G 01 D 11/24**

(30) Priority: **01.12.78 SE 7812396**

(43) Date of publication of application:
**11.06.80 Bulletin 80/12**

(84) Designated Contracting States:
**AT BE CH DE FR GB IT LU NL**

(71) Applicant: **Häggbom, Rolf**
**Isaac Grünewalds väg 7**
**S-133 00 Saltsjöbaden(SE)**

(72) Inventor: **Häggbom, Rolf**
**Isaac Grünewalds väg 7**
**S-133 00 Saltsjöbaden(SE)**

(74) Representative: **Berglund, Gustav Arthur et al,**
**AWAPATENT AB Box 5117**
**S-200 71 Malmö(SE)**

(54) A device for eliminating disturbing reflection in a display screen.

(57) A device for eliminating disturbing reflections in a reflective surface intended for image display utilizes a screen with a dark, mat surface whose mirror reflection at the reflective surface completely covers the reflective surface.

FIG.1

EP 0 012 125 A2

# A DEVICE FOR ELIMINATING DISTURBING REFLECTION IN A DISPLAY SCREEN

The present invention relates to a device for eliminating disturbing reflection in a display screen when this is viewed from a point which is not traversed by the normal to any point on the display screen.

Many images are presented through transparent material, for example, glass and Plexiglass®. This is effected in picture tubes, radar screens, micro film screens, focusing screens, instrument panels etc. Disturbing reflection can, here, arise because the display screen, including the surface of the transparent material, is glossy or semi-glossy, that is to say more or less reflective. A disturbing reflection occurs when a relatively bright object is reflected in the display screen or part thereof.

Such disturbances give rise to discomfort and tiredness, working environmental problems which are now well documented. With the intention of limiting such discomfort, plans are, at the present time, under consideration for a restriction of the permitted length of time for continuous work at, for example, an image display screen, to 2 hours.

Thus, there is a need in the art for a reduction of reflection disturbances of the above-mentioned type. Attempts have long been made to realize such a reduction by means of a series of measures which have a common feature that, at the same time as the reflection is damped, the light strength and/or contrast in the image being displayed is weakened. Examples of such measures are the flatting of the display surface by the application of a semi-transparent, mat film, the placing of polaroid filters or fine-mesh nets in front of the display screen, the screening-off of incident light by means of "hoods", the reduction of the ambient light level and the elimination of the sources of such reflection by means of the removal of windows, lamps and other bright objects.

It is possible to damp these reflection disturbances

2

by means of such measures, but their effect is, unfortunately, not greater than from 10 to 15%, for which reason no considerable reduction of the discomfort caused by such disturbances has been achieved. Certain of the above-mentioned measures involve the manifestation of new problems, such as a worsening of the working environment in the event of removal of the sources of such reflection.

The major object of the present invention is to realize a device for the effective elimination of the above-described reflection disturbances.

To this end, the present invention calls for the utilization of a completely different principle from those used in prior art measures. In order to prevent all disturbing reflection from the display screen, a dark, mat surface is, according to the present invention, deliberately reflected at the screen so that the mirror reflection of this surface covers the entire display screen. It will be appreciated that such a reflection requires that the display screen can be viewed from a point which is not traversed by the normal to any point on the display screen. According to the present invention, a device of the type disclosed by way of introduction is, more precisely, characterized by a shield member with a dark, mat surface, this shield member being so designed and located with respect to the display screen that this is completely covered by the mirror reflection of the dark, mat surface in the display screen.

As a result of the device according to the present invention, it is possible to eliminate all reflection disturbances without in any way weakening the light strength or contrast of the image display.

The nature of the present invention and its aspects will be more readily understood from the following brief description of the accompanying drawing, and discussing relating thereto.

In the accompanying drawing:

Fig. 1 shows one embodiment of a device according to the present invention; and

Fig. 2 shows how the configuration and location of a device according to the present invention may be determined.

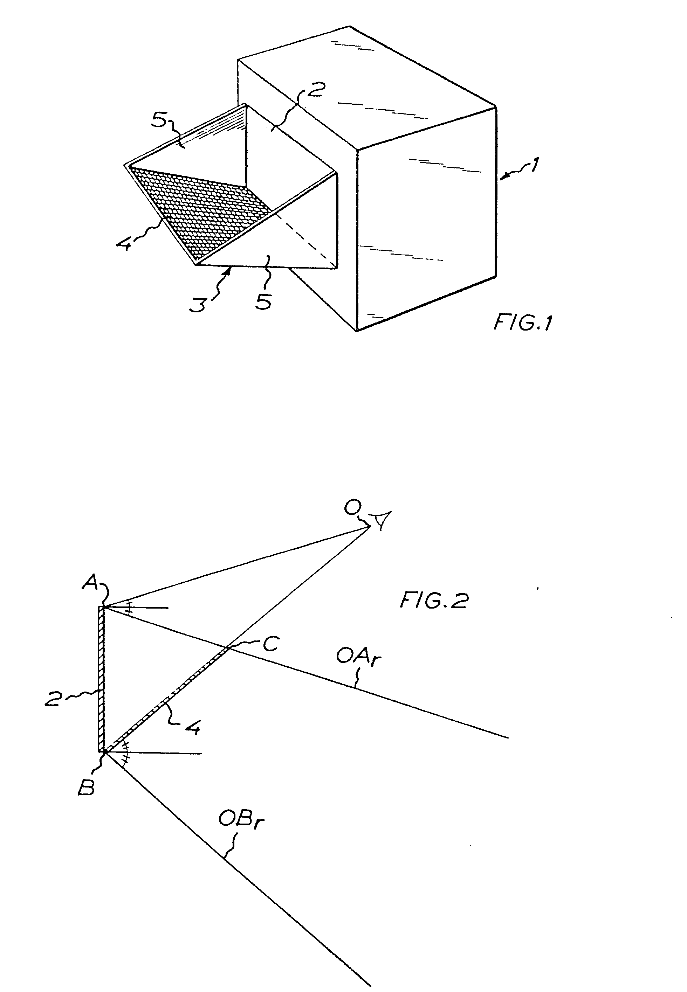

Fig. 1 shows an apparatus 1 which has a display screen 2 with a substantially rectangular and planar display surface for the presentation of some kind of information. For preventing reflection disturbances, the apparatus 1 has, according to the invention, been provided with a U-shaped shield member 3 which has a bottom 4 and two end walls 5. The surfaces of the shield member adjoining the display screen 2 are mat and dark, preferably black. The design and location of the member 3 with respect to the display screen will be described in greater detail below with reference to Fig. 2.

In Fig. 2, the display screen 2 is shown from the side and it has been assumed that the screen is viewed from a point O. The upper edge of the display screen 2 (and the surface of the screen) is designated A and its lower edge B. It will be appreciated that a surface reflected at the display screen will completely cover the display screen if it extends, throughout the entire width of the display screen surface, from a line $OA_r$, along which a ray from the point O to the point A is reflected from the display screen surface, to a line $OB_r$, along which a ray from the point O to the point B is reflected from the display screen surface. However, no portion of the area OAB should be screened-off, since it would then not be possible to observe all of the display screen surface from the point O.

In order to achieve the contemplated effect, a dark, mat surface on the bottom 4 of the shield member 3 can, thus, be produced and located such that it extends from the point B to a point C which constitutes the point of intersection between the lines OB and $OA_r$. The same mat, dark surface will then cover the entire display screen surface when viewed from any point whatsoever above the line AO and an extension of the line BO.

The design and location of the end walls 5 of the shield member 3 can, naturally, be effected in the same manner as was described above for the bottom 4 of the shield member.

A number of alternative designs  and locations of the shield member 3 with respect to the display screen surface in question are thus possible within the spirit and scope of the invention. Besides, the shield member 3 need not be disposed in fixed relationship to the display screen surface but may be made pivotal, for example such that the inclination of the line BO in Fig. 2 may be varied. It will finally be appreciated that the invention is also applicable to other display screen surfaces than purely rectangular and planar surfaces and that the display screen surface may be oriented in a different way from that shown on the drawing.

CLAIMS

1. A device for eliminating disturbing reflection in a display screen (2) when same is viewed from a point (O) which is not traversed by the normal to any point on the display screen surface, characterized by a shield member (3) with a dark, mat surface, said shield member being designed and located with respect to the display screen surface (2) such that this is completely covered by the mirror reflection of the dark, mat surface at the display screen surface.

2. The device as recited in claim 1, characterized in that a portion of the edge (C) of the dark, mat surface most proximal the point of observation (O) lies in the plane defined by lines from the point of observation to a distal edge (B) of the display screen surface.

3. The device as recited in claim 1 or 2, characterized in that the edge (B) of the dark, mat surface located most distal from the point of observation (O) substantially connects with the distal edge (B) of the display screen surface.

4. The device as recited in any one of claims 1-3, characterized in that the shield member (3) is U-shaped with a bottom (4) and two end walls (5).

5. The device as recited in claim 4, characterized in that the shield member (3) is pivotally mounted with respect to the display screen surface.

FIG.1

FIG.2